(19) Europäisches Patentamt / European Patent Office / Office européen des brevets

(11) **EP 4 484 383 B1**

(12) **EUROPEAN PATENT SPECIFICATION**

(45) Date of publication and mention of the grant of the patent:
**28.05.2025 Bulletin 2025/22**

(21) Application number: **23215146.4**

(22) Date of filing: **08.12.2023**

(51) International Patent Classification (IPC):
*C02F 1/72* (2023.01)   *C02F 1/78* (2023.01)
*B01J 19/32* (2006.01)   *B01J 21/04* (2006.01)
*B01J 35/56* (2024.01)   *B01J 23/75* (2006.01)
*B01J 23/745* (2006.01)   *C02F 103/30* (2006.01)

(52) Cooperative Patent Classification (CPC):
**C02F 1/78; B01J 19/32; B01J 23/745; B01J 23/75; B01J 35/395; C02F 1/725;** C02F 2103/30; C02F 2201/003; C02F 2201/004; C02F 2201/007; C02F 2305/023

(54) **BUBBLE COLUMN FOR CATALYTIC OZONATION WITH THIN-FILM HETEROGENEOUS CATALYST**

BLASENSÄULE ZUR KATALYTISCHEN OZONIERUNG MIT HETEROGENEM DÜNNSCHICHTKATALYSATOR

COLONNE À BULLES POUR L'OZONATION CATALYTIQUE AVEC UN CATALYSEUR HÉTÉROGÈNE À FILM MINCE

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR

(30) Priority: **27.06.2023 PL 44536223**

(43) Date of publication of application:
**01.01.2025 Bulletin 2025/01**

(73) Proprietor: **Politechnika Lodzka**
**90-924 Lodz (PL)**

(72) Inventors:
• **Tyczkowski, Jacek**
  **91-850 Lodz (PL)**
• **Kierzkowska-Pawlak, Hanna**
  **91-496 Lodz (PL)**
• **Kruszczak, Ewelina**
  **62-570 Rychwal (PL)**
• **Bilinska, Lucyna**
  **94-254 Lodz (PL)**
• **Bilinska, Magdalena**
  **94-255 Lodz (PL)**
• **Gmurek, Marta**
  **91-161 Lodz (PL)**

(74) Representative: **AOMB Polska Sp. z.o.o.**
**ul. Rondo Ignacego Daszynskiego 1**
**00-843 Warsaw (PL)**

(56) References cited:
CN-A- 110 075 708     CN-C- 1 149 122
CN-U- 204 508 905     CN-U- 215 327 164
US-A1- 2012 168 300     US-B2- 11 279 640

• TYCZKOWSKI JACEK ET AL: "Cold plasma - A promising tool for the production of thin-film nanocatalysts", CATALYSIS TODAY, ELSEVIER, AMSTERDAM, NL, vol. 337, 18 March 2019 (2019-03-18), pages 44 - 54, XP085764230, ISSN: 0920-5861, [retrieved on 20190318], DOI: 10.1016/J.CATTOD.2019.03.037
• KHAMPARIA SHRADDHA ET AL: "Adsorption in combination with ozonation for the treatment of textile waste water: a critical review", FRONTIERS OF ENVIRONMENTAL SCIENCE, HIGHER EDUCATION PRESS, BEIJING, vol. 11, no. 1, 10 January 2017 (2017-01-10), pages 1 - 18, XP036129151, ISSN: 2095-2201, [retrieved on 20170110], DOI: 10.1007/S11783-017-0899-5

## Description

## Technical field

The invention relates to a bubble column for catalytic ozonation with a thin-film heterogeneous catalyst, intended for a wastewater treatment process by catalytic ozonation, especially textile wastewater.

## Background art

Textile production is inextricably linked to the need to use intensive chemical treatment processes. For this reason, contamination of textile wastewater with detergents, dyes and auxiliaries (salts, acids, bases) is inevitable. This results in high alkalinity, salinity and extremely intense colour of the wastewater. These features are particularly characteristic of dye baths and are associated with their very low biodegradability. The value of the $BOD_5/COD$ ratio, which is a measure of biodegradability, is usually below 0.4, which disqualifies treatment using the activated sludge methods. Consequently, transferring such wastewater to collective municipal treatment systems, which are based mainly on biological processes (activated sludge), may lead to their malfunctioning and emission of pollutants into the environment (Chemosphere 75 (2009) p. 250-255 and Ozone-Science & Engineering 39 (2017) p. 357-365.

In the case of wastewater characterized by low biodegradability, it is more advisable to treat it using physico-chemical methods. A particularly preferred solution readily used for textile wastewater over the last 20 years have been advanced oxidation processes (AOPs), including catalytic ozonation. The action of AOPs is based on the high oxidation potential of reactive oxygen species (ROS), mainly ozone (2.07 V) and hydroxyl radicals (2.8 V) (Chemical Engineering Journal 376 (2019) p. 120597.

The publication in Separation and Purification Technology 72 (2010) 186-193 discloses a bubble column containing an insert providing for increased mass transfer from the gaseous phase (ozone) to the liquid phase, which is textile dyeing wastewater. The insert consists of porous polymer hollow fiber membranes made of polyvinylidene fluoride (PVDF) and polytetrafluoroethylene (PTFE), arranged longitudinally in relation to the axis of the device and longitudinally to the direction of the gas flow.

The solution reported in Scientific Reports 8 (2018) p. 1-11 discloses the use of a contact column packed with iron shavings from machining for catalytic ozonation of textile wastewater. The catalytic effect of iron compounds in the ozonation process has been proven, but the significance of the catalyst itself has not been demonstrated.

The publication Journal of Hazardous Materials 357 (2018) p. 363-375 discloses the use of a column packed with ceramic rings enriched with iron compounds for catalytic ozone pre-treatment of complex textile wastewater.

The publication Journal of Environmental Chemical Engineering 3 (2015) p. 1860-1871 discloses the use of a contact column comprising a fluidized bed of granulated aluminium compounds as a catalyst for catalytic ozonation of industrial textile wastewater.

In turn, the publication Separation and Purification Technology 257 (2021) p. 117909 demonstrates an intensified effectiveness of textile wastewater treatment by ozonation in a tank reactor with a block stirrer made of porous polymer - foam.

The patent specification PL 150303 discloses the dyeing wastewater treatment by ozonation in a bubble column in the presence of catalysts in the form of mixtures of oxides of metals such as copper, cobalt, manganese, molybdenum, iron, nickel, magnesium, deposited on a solid substrate in the form of granulated activated carbon, which is dispersed in the continuous phase (water, wastewater) and must be removed by filtration.

US 11 279 640 B2, CN 215 327 164 U and CN 110 075 708 A are some further known examples of bubble columns for catalytic ozonation.

The bubble columns used in the solutions presented above did not ensure acceleration of the reaction regime between ozone and pollutants in the wastewater treatment process in a catalytic ozonation reaction.

## Summary of the Invention

The objective of the invention is to develop a bubble column structure that will accelerate the wastewater treatment process by catalytic ozonation by increasing the ozone transfer rate from the gas phase to the liquid phase of wastewater and the reaction rate between ozone and wastewater.

A bubble column for catalytic ozonation with a thin-film heterogeneous catalyst, intended for a wastewater treatment process by catalytic ozonation, especially textile wastewater, in a form of a vertically positioned pipe section closed at a top with a cover connected by a pipe union to walls of the column, wherein at a bottom of the column also connected by a pipe union to the walls of the column, a diffuser for supplying ozone is mounted, said bubble column comprising a packing in a form of an oxide catalyst deposited on a solid substrate, **according to the first embodiment of the invention,** said bubble column comprises the packing in a form of trays arranged perpendicular to a vertical column axis, wherein each of said trays being a circular metal knitted mesh made of wire with a thickness of at least 0.05 mm, coated with a catalyst layer with a thickness of not more than 2 $\mu$m comprising a metal oxide, preferably aluminium trioxide, cobalt oxide, iron oxide or an oxide of a metal from the group of transition elements, with a mesh diameter not less than 3 mm, wherein edges of said circular metal knitted mesh are fixed between two rings with an external diameter adapted to an internal diameter of the column of at least 40 mm, said rings being placed one on top of the other and connected by a pipe union, wherein the maximum number of the trays is determined with the formula

$$\frac{0.85 \cdot L}{l}$$

wherein

> $L$ is the column height,
> $l$ is the distance between the trays, wherein $l$ is equal to 70 x the diameter of an ozone bubble used in the ozonation process.

An upper tray is suspended on chains, preferably three, wherein upper ends of the chains are suspended on hooks attached to the cover, whereas lower ends of the chains are connected to hooks mounted in an upper ring of the upper tray. The remaining trays are suspended on chains, upper ends of which are suspended on hooks attached to lower rings of the trays located above, wherein the lower ends of the chains are connected to hooks attached to the upper rings of the trays suspended on said chains.

The column **according to the second embodiment of the invention** is characterized in that a lower tray of the packing is supported on supports, preferably in a form of tubular rods, preferably three supports, wherein upper ends of the supports are attached to a lower ring of the tray, and wherein lower ends of the supports are supported on a grate placed at the bottom of the column. The upper ends of supports are attached to the lower ring of each of the remaining trays, the lower ends of the supports are supported by an upper ring of the tray located below.

A diffuser is used, preferably with a mesh diameter of 10 - 100 $\mu$m.

Structural members of the column are made of chemically resistant materials, preferably 316, 304 acid-resistant steel, AF-FeCrAl Kanthal steel.

The trays with catalyst-coated mesh, preferably by thermal, plasma or sonic treatment, are used.

The column according to the invention ensures increased efficiency of use of ozone as an oxidant in water and wastewater treatment processes, allows for increasing the ozone transfer rate from the gas phase to the liquid phase and increasing the reaction rate between ozone and the pollutant. The geometry of the column according to the invention reduces mass transfer resistance, ensures stable mounting of the catalytic insert and movement of the feed gas bubbles along the entire height of the column.

The column according to the invention is used to increase the use of ozone as an oxidizing agent in water treatment and wastewater treatment processes, especially textile wastewater.

**Brief description of Drawings**

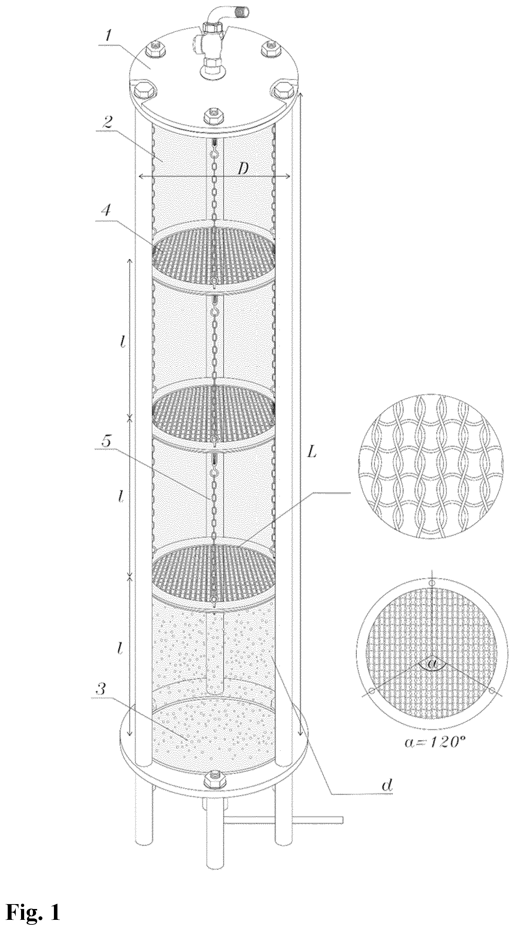

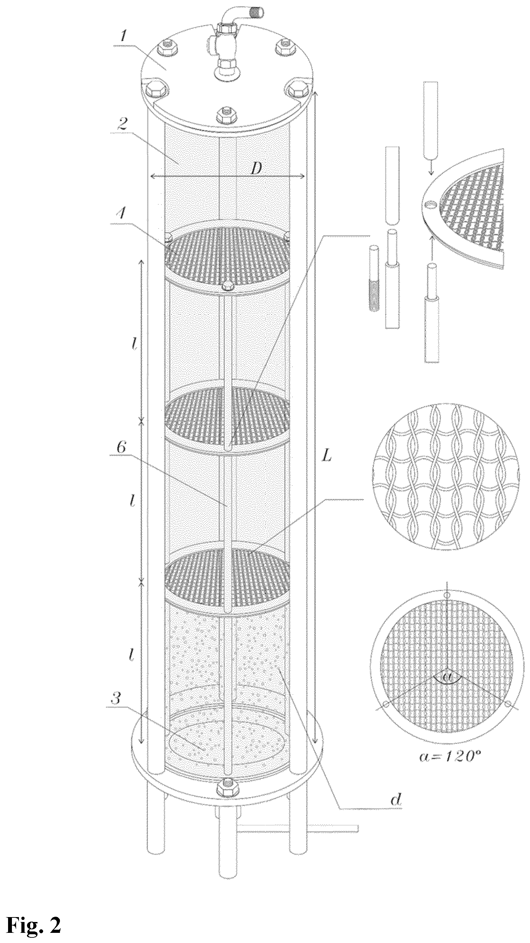

The subject-matter of the invention is illustrated in an embodiment in the drawings, wherein Fig. 1 shows a bubble column with trays suspended on chains (the first embodiment), in a perspective view, and Fig. 2 - a bubble column with trays on supports (the second embodiment), in a perspective view.

**Detailed description of preferred embodiments**

A bubble column for catalytic ozonation, shown in Fig. 1, has the form of a vertically positioned pipe section closed at the top with a cover *1* connected by a pipe union to the walls *2* of the column. At the bottom of the column *3*, connected by a pipe union to the walls 2 of the column, a diffuser with a mesh diameter of 10 - 100 $\mu$m for supplying ozone is mounted. The column comprises a packing in the form of trays *4* arranged perpendicular to the vertical column axis. Each tray *4* consists of a circular metal knitted mesh made of wire with a thickness of at least 0.11 mm, coated with a catalyst layer with a thickness of not more than 2 $\mu$m, with a mesh diameter not less than 3 mm, the edges of which are fixed between two rings with an external diameter adapted to the internal diameter *D* of the column of at least 40 mm, joined by a pipe union. The upper tray *4* is suspended on three chains *5* arranged on its circumference at a distance of 120° from each other, the upper ends of which are suspended on hooks attached to the cover *1,* and the lower ends of the chains *5* are connected to the hooks attached to the upper ring of the upper tray *4*. The remaining trays *4* are suspended on chains *5*, the upper ends of which are suspended on hooks attached to the lower rings of the trays *4* located above, and the lower ends of the chains *5* are connected to the hooks attached to the upper rings of the trays *4* suspended on these chains. The maximum number of trays *4* is determined with the formula

$$\frac{0.85 \cdot L}{l}$$

wherein

> $L$ is the column height,
> $l$ is the distance between the trays, wherein $l$ is equal to 70 x the diameter of the ozone bubble used in the ozonation process.

The bubble column for catalytic ozonation, shown in Fig. 2, has the form of a vertically positioned pipe section closed at the top with a cover *1* connected by a pipe union to the walls *2* of the column. At the bottom of the column *3*, connected by a pipe union to the walls *2* of the column, a diffuser for supplying ozone with a mesh diameter of 10 - 100 $\mu$m is mounted. The column comprises a packing in the form of trays *4* arranged perpendicular to the vertical column axis. Each tray 4 consists of a circular metal knitted mesh made of wire with a thickness of at least 0.11 mm, coated with a catalyst layer with a thickness of not more than 2 $\mu$m, with a mesh diameter of not less than 3 mm, the edges of which are mounted between two rings with an external diameter adapted to the internal diameter D of the column of at least 40 mm, joined by a pipe union. The lower tray 4 of the packing is supported on three supports 6 in the form of tubular rods, the upper ends of which are attached to the lower ring of this tray, and the lower ends of the supports 6 are supported on a grate placed at the bottom 3 of the column. Attached to the lower ring of each of the remaining trays 4 are the upper ends of supports 6, the lower ends of which are supported on the upper rings of the trays 4 located below. The maximum number of trays 4 is determined with the formula

$$\frac{0.85 \cdot L}{l}$$

wherein L and l have the meanings given above.

The working gas (an oxygen-ozone mixture with predetermined ozone concentration) is fed into the column filled with the liquid to be ozonated (e.g. wastewater) through a diffuser located at the bottom of the column. The gas fed to the column moves along the vertical column axis towards the cover 1, passing the trays 4. The ozone fed to the column is absorbed in the liquid that fills its interior, contacting the catalytic material on the trays 4, wherein the contact of ozone with the catalytic material occurs both in the gas and in the liquid phases.

For experimental purposes, a column with a height of L = 4.25 x D and a diameter of D = 8 x 10$^{-2}$ m, made of 316 acid-resistant steel, was used. The mesh of trays 4 was knitted of a 0.11 mm thick wire made of AF-FeCrAl Kanthal steel, coated with a catalyst layer in the form of a nanomaterial comprising aluminium trioxide (Al$_2$O$_3$), with a thickness = 350 $\pm$ 100 nm, obtained by calcinating the mesh at 900°C for 48 hours. A diffuser with hole sizes $d_o$ = 16 - 40 $\mu$m (G3) generated ozone in the form of bubbles with a diameter d= 1.051 $\pm$ 0.158 mm. Three trays 4 suspended on chains 5 were used as a packing. The number of trays was determined with the formula

$$\frac{0.85 \cdot L}{l}$$

with the distance between the trays l equal to 70 x d.

The advantageous effects of using the column according to the invention as described above were noted by analyzing the hydrodynamic parameters during the saturation of distilled water with ozone (in an environment with pH 2). The gas phase retention coefficient was demonstrated to increase from $\varepsilon_{G1}$ = 0.37$\cdot$10$^{-2}$ for a standard column (without trays) to $\varepsilon_{G2}$ = 0.73$\cdot$10$^{-2}$ for the

system with a catalyst on trays 4. The mass transfer area was increased from a$_1$ = 21.61$\pm$3.3 1/m to a$_2$ = 49.05 $\pm$6.4 1/m after using trays 4 with a catalyst. The value of the volumetric mass transfer coefficient increased from k$_{L1}$a= 1.09$\pm$0.05$\cdot$10$^{-2}$ 1/s to k$_{L2}$a= 1.87$\pm$0.05$\cdot$10$^{-2}$ 1/s with an unchanged value of the apparent velocity of the gas stream supplying the system equal to u$_G$ = 3.6$\cdot$10$^{-4}$ m/s.

In turn, based on experimental data related to the measurement of ozone concentration in the gas and liquid phases, it was proven that for the bubble column according to the invention, the consumption of ozone in the decolorizing process of textile wastewater was 10% higher than in the case of a standard column during a typical ozonation process.

In order to study the kinetics of pollutants removal from textile wastewater in the column according to the invention, a bubble column with a height of L = 4.25 x D and a diameter of D = 8 x 10$^{-2}$ m, made of 316 acid-resistant steel, was used. The mesh of trays 4 was knitted of a 0.11 mm thick wire made of AF-FeCrAl Kanthal steel, coated with a catalyst layer in the form of a nanomaterial comprising cobalt oxide (Co$_3$O$_4$), with a thickness = 500 $\pm$ 150 nm, obtained by deposition of the catalyst layer with the plasma deposition technique using a low-temperature non-equilibrium plasma generated under reduced pressure in a glow discharge of radio frequency 13.56 MHz in argon as an inert working gas, using a two-step procedure (first step - etching in argon plasma, second step - plasma deposition of a thin layer under flow of vapours of an organometallic cobalt precursor and argon as a carrier gas) followed by the calcination process in the presence of oxygen. A diffuser with hole sizes $d_o$ = 16 - 40 $\mu$m generated ozone in the form of bubbles with a diameter d = 1.051 $\pm$ 0.158 mm. Three trays 4 supported on supports 6 were used as a packing. The number of trays was determined with the formula

$$\frac{0.85 \cdot L}{l}$$

with the distance between the trays l equal to 70 x d.

The advantageous effects of using the column according to the invention as described above were noted by studying the kinetics of pollutant removal (Reactive Black 5 dye) from the aqueous environment. The kinetic studies confirmed the catalytic activity of the mesh with the Co$_3$O$_4$ layer in a wide pH range from 2 to 10. The highest activity was demonstrated at pH above the zero charge point (pH$_{PZC}$ for Co$_3$O$_4$ is 6.8). While the value of the rate constant for the reaction with the pollutant for the classical ozonation without a catalyst was k$_1$ = 1.66 10$^{-3}$ 1/s, it was k$_2$ = 2.46 10$^{-3}$ 1/s for the catalytic ozonation with a plasma catalyst comprising Co$_3$O$_4$ (in a reaction environment with pH 10). This meant an increase in the rate of the ozonation process by 50%. High stability of the cobalt oxide-based catalyst was demonstrated. Repeating the process for seven cycles did not result in reduction of the rate constant of pollutant removal, and the process itself was reproducible.

In order to study the kinetics of pollutants removal from textile wastewater in the column according to the invention, a bubble column with a height of $L = 4.25 \times D$ and a diameter of $D = 8 \times 10^{-2}$ m, made of 316 acid-resistant steel, was also used. The mesh of trays *4* was knitted of a 0.11 mm thick wire made of AF-FeCrAl Kanthal steel, coated with a catalyst layer in the form of a nanomaterial comprising iron oxide ($Fe_2O_3$), with a thickness = 500 ± 150 nm, obtained by deposition of the catalyst layer with the plasma deposition technique using a low-temperature non-equilibrium plasma generated under reduced pressure in a glow discharge of radio frequency 13.56 MHz in argon as an inert working gas, using a two-step procedure (first step - etching in argon plasma, second step - plasma deposition of a thin layer under flow of vapours of an organometallic iron precursor and argon as a carrier gas) followed by the calcination process in the presence of oxygen. A diffuser with hole sizes $d_o$ = 16 - 40 $\mu$m generated ozone in the form of bubbles with a diameter $d$ = 1.051 ± 0.158 mm. Three trays *4* supported on supports *6* were used as a packing. The number of trays was determined with the formula

$$\frac{0.85 \cdot L}{l}$$

with the distance between the trays *l* equal to 70 x *d.*

The advantageous effects of using the column according to the invention as described above were noted by studying the kinetics of pollutant removal (Reactive Black 5 dye) from the aqueous environment. The kinetic studies confirmed the catalytic activity of the mesh with the $Fe_2O_3$ layer in a wide pH range from 2 to 10. The highest activity was demonstrated at pH above the zero charge point ($pH_{PZC}$ for $Fe_2O_3$ is 6.6 - 6.8). While the value of the rate constant for the reaction with the pollutant for the classical ozonation without a catalyst was $k_1$ = 1.66 $10^{-3}$ 1/s, it was $k_2$ = 2.93 $10^{-3}$ 1/s for the catalytic ozonation with a plasma catalyst comprising $Fe_2O_3$ (in a reaction environment with pH 10). This meant an increase in the rate of the ozonation process by 76%. High stability of the iron oxide-based catalyst was demonstrated. Repeating the process for seven cycles did not result in reduction of the rate constant of pollutant removal, and the process itself was reproducible.

## Claims

1. A bubble column for catalytic ozonation with a thin-film heterogeneous catalyst, intended for a wastewater treatment process by catalytic ozonation, especially textile wastewater, in a form of a vertically positioned pipe section closed at a top with a cover connected by a pipe union to walls of the column, wherein at a bottom of the column connected by a pipe union to the walls of the column, a diffuser for supplying ozone is mounted, said bubble column comprising a packing in a form of an oxide catalyst deposited on a solid substrate, **characterized in that** the bubble column further comprises a packing in a form of trays (4) arranged perpendicular to a vertical column axis, wherein each of said trays being a circular metal knitted mesh made of wire with a thickness of at least 0.05 mm, coated with a catalyst layer with a thickness of not more than 2 $\mu$m comprising a metal oxide, with a mesh diameter not less than 3 mm, wherein edges of said circular metal knitted mesh are fixed between two rings with an external diameter adapted to the internal diameter (D) of the column of at least 40 mm, said rings being placed one on top of the other and connected with a pipe union, wherein the maximum number of the trays is determined with the formula

$$\frac{0.85 \cdot L}{l}$$

wherein

   *L* is the column height,
   *l* is the distance between the trays (4), and *l* is equal to 70 x the diameter of an ozone bubble used in the ozonation process, and wherein an upper tray (4) is suspended on chains (5), upper ends of which are suspended on hooks attached to the cover (1), whereas lower ends of the chains (5) are connected to hooks mounted in an upper ring of the upper tray (4), while the remaining trays (4) are suspended on the chains (5), the upper ends of which are suspended on hooks attached to lower rings of the trays (4) located above, and the lower ends of the chains (5) are connected to hooks attached to the upper rings of the trays (4) suspended on said chains (5).

2. The column according to claim 1, **characterized in that** the trays (4) are coated with a catalyst comprising aluminium trioxide, cobalt oxide, iron oxide or an oxide of a metal from the group of transition elements.

3. The column according to claim 1, **characterized in that** structural members of the column are made of chemically resistant materials, such as 316, 304 acid-resistant steel, AF-FeCrAl Kanthal steel.

4. The column according to claim 1, **characterized in that** the trays (4) are coated with a catalyst by thermal, plasma or sonic treatment.

**5.** The column according to claim 1, **characterized in that** the trays (4) are suspended on three chains (5).

**6.** The column according to claim 1, **characterized in that** the diffuser with a mesh diameter of 10 - 100 $\mu$m is used.

**7.** A bubble column for catalytic ozonation with a thin-film heterogeneous catalyst, intended for a wastewater treatment process by catalytic ozonation, especially textile wastewater, in a form of a vertically positioned pipe section closed at a top with a cover connected by a pipe union to walls of the column, wherein at a bottom of the column connected by a pipe union to the walls of the column, a diffuser for supplying ozone is mounted, said bubble column comprising a packing in a form of an oxide catalyst deposited on a solid substrate, **characterized in that** said bubble column further comprises a packing in a form of trays (4) arranged perpendicular to a vertical column axis, wherein each of the trays being a circular metal knitted mesh made of wire with a thickness of at least 0.05 mm, coated with a catalyst layer with a thickness of not more than 2 $\mu$m comprising a metal oxide, with a mesh diameter not less than 3 mm, wherein edges of said circular metal knitted mesh are fixed between two rings with an external diameter adapted to the internal diameter (D) of the column of at least 40 mm, said rings being placed one on top of the other and connected with a pipe union, wherein the maximum number of the trays is determined with the formula

$$\frac{0.85 \cdot L}{l}$$

wherein

L is the column height,
l is the distance between the trays (4), and l is equal to 70 x the diameter of an ozone bubble used in the ozonation process, and wherein a lower tray (4) of the packing is supported on supports (6), wherein upper ends of the supports (6) are attached to a lower ring of the lower tray (4), wherein lower ends of the supports (6) are supported on a grate placed at the bottom (3) of the column, wherein the upper ends of supports (6) are attached to the lower ring of each of the remaining trays (4), wherein the lower ends of said supports are supported by upper rings of the trays (4) located below.

**8.** The column according to claim 7, **characterized in that** the trays (4) are coated with a catalyst comprising aluminium trioxide, cobalt oxide, iron oxide or an oxide of a metal from the group of transition elements.

**9.** The column according to claim 7, **characterized in that** structural members of the column are made of chemically resistant materials, such as 316, 304 acid-resistant steel, AF-FeCrAl Kanthal steel.

**10.** The column according to claim 7, **characterized in that** it comprises the trays (4) with mesh that is coated with a catalyst by thermal, plasma or sonic treatment.

**11.** The column according to claim 7, **characterized in that** the trays (4) are supported by three supports (6).

**12.** The column according to claim 7, **characterized in that** the supports are in a form of tubular rods.

**13.** The column according to claim 7, **characterized in that** the diffuser with a mesh diameter of 10 - 100 $\mu$m is used.

**Patentansprüche**

**1.** Blasensäule für die katalytische Ozonierung mit einem heterogenen Dünnschichtkatalysator, die für ein Abwasserbehandlungsverfahren durch katalytische Ozonierung, insbesondere von Textilabwasser, in Form eines vertikal angeordneten Rohrabschnitts vorgesehen ist, der oben mit einer Abdeckung verschlossen ist, der über eine Rohrverbindung mit den Wänden der Säule verbunden ist, wobei am Boden der Säule ein Diffusor zur Ozonzufuhr angebracht ist, der über eine Rohrverbindung mit den Wänden der Säule verbunden ist, wobei die Blasensäule eine Packung in Form eines Oxidkatalysators umfasst, der auf einem festen Substrat abgeschieden ist, **dadurch gekennzeichnet, dass** die Blasensäule ferner eine Packung in Form von Böden (4) umfasst, die senkrecht zu einer vertikalen Säulenachse angeordnet sind, wobei jeder der Böden ein kreisförmiges Metallgestrick aus Draht mit einer Dicke von mindestens 0,05 mm ist, das mit einer Katalysatorschicht mit einer Dicke von nicht mehr als 2 $\mu$m beschichtet ist, die ein Metalloxid umfasst, mit einem Maschendurchmesser von nicht weniger als 3 mm, wobei die Kanten des kreisförmigen Metallgestricks zwischen zwei Ringen mit einem an den Innendurchmesser (D) der Säule angepassten Außendurchmesser von mindestens 40 mm befestigt sind, wobei die Ringe übereinander angeordnet und mit einer Rohrverbindung verbunden sind, wobei die maximale Anzahl der Böden durch die Folgende Formel bestimmt wird,

$$\frac{0.85 \cdot L}{l}$$

wobei

$L$ die Säulenhöhe ist,
$l$ der Abstand zwischen den Böden (4) ist und $l$ gleich 70 mal Durchmesser einer Ozonblase ist, die im Ozonisierungsverfahren verwendet wird, und wobei ein oberer Boden (4) an Ketten (5) aufgehängt ist, deren obere Enden an Haken aufgehängt sind, die an der Abdeckung (1) angebracht sind, während die unteren Enden der Ketten (5) mit Haken verbunden sind, die in einem oberen Ring des oberen Bodens (4) angebracht sind, während die übrigen Böden (4) an den Ketten (5) aufgehängt sind, deren obere Enden an Haken aufgehängt sind, die an den unteren Ringen der darüber befindlichen Böden (4) angebracht sind, und die unteren Enden der Ketten (5) mit Haken verbunden sind, die an den oberen Ringen der an den Ketten (5) aufgehängten Böden (4) angebracht sind.

**2.** Die Säule gemäß Anspruch 1, **dadurch gekennzeichnet, dass** die Böden (4) mit einem Katalysator beschichtet sind, der Aluminiumtrioxid, Kobaltoxid, Eisenoxid oder ein Oxid eines Metalls aus der Gruppe der Übergangselemente umfasst.

**3.** Die Säule gemäß Anspruch 1, **dadurch gekennzeichnet, dass** die Strukturelemente der Säule aus chemisch beständigen Materialien bestehen, wie z. B. säurebeständigem Stahl 316, 304, AF-FeCrAl-Kanthal-Stahl.

**4.** Die Säule gemäß Anspruch 1, **dadurch gekennzeichnet, dass** die Böden (4) durch thermische, Plasma- oder Schallbehandlung mit einem Katalysator beschichtet sind.

**5.** Die Säule gemäß Anspruch 1, **dadurch gekennzeichnet, dass** die Böden (4) an drei Ketten (5) aufgehängt sind.

**6.** Die Säule gemäß Anspruch 1, **dadurch gekennzeichnet, dass** der Diffusor mit einem Maschendurchmesser von 10-100 $\mu$m verwendet wird.

**7.** Blasensäule für die katalytische Ozonierung mit einem heterogenen Dünnschichtkatalysator, die für ein Abwasserbehandlungsverfahren durch katalytische Ozonierung, insbesondere von Textilabwasser, in Form eines vertikal angeordneten Rohrabschnitts vorgesehen ist, der oben mit einer Abdeckung verschlossen ist, der über eine Rohrverbindung mit den Wänden der Säule verbunden ist, wobei am Boden der Säule ein Diffusor zur Ozonzufuhr angebracht ist, der über eine Rohrverbindung mit den Wänden der Säule verbunden ist, wobei die Blasensäule eine Packung in Form eines Oxidkatalysators umfasst, der auf einem festen Substrat abgeschieden ist, **dadurch gekennzeichnet, dass** die Blasensäule ferner eine Packung in Form von Böden (4) umfasst, die senkrecht zu einer vertikalen Säulenachse angeordnet sind, wobei jeder der Böden ein kreisförmiges Metallgestrick aus Draht mit einer Dicke von mindestens 0,05 mm ist, das mit einer Katalysatorschicht mit einer Dicke von nicht mehr als 2 $\mu$m beschichtet ist, die ein Metalloxid umfasst, mit einem Maschendurchmesser von nicht weniger als 3 mm, wobei die Kanten des kreisförmigen Metallgestricks zwischen zwei Ringen mit einem an den Innendurchmesser (D) der Säule angepassten Außendurchmesser von mindestens 40 mm befestigt sind, wobei die Ringe übereinander angeordnet und mit einer Rohrverbindung verbunden sind, wobei die maximale Anzahl der Böden durch die Folgende Formel bestimmt wird,

$$\frac{0.85 \cdot L}{l}$$

wobei

$L$ die Säulenhöhe ist,
$l$ der Abstand zwischen den Böden (4) ist und $l$ gleich 70 mal Durchmesser einer Ozonblase ist, die im Ozonierungsprozess verwendet wird, und wobei ein unterer Boden (4) der Packung auf Stützen (6) abgestützt ist, wobei obere Enden der Stützen (6) an einem unteren Ring des unteren Bodens (4) angebracht sind, wobei die unteren Enden der Stützen (6) auf einem Rost abgestützt sind, der am Boden (3) der Säule angeordnet ist, wobei die oberen Enden der Stützen (6) am unteren Ring jedes der verbleibenden Böden (4) befestigt sind, wobei die unteren Enden der Stützen von oberen Ringen der darunter angeordneten Böden (4) abgestützt sind.

**8.** Die Säule gemäß Anspruch 7, **dadurch gekennzeichnet, dass** die Böden (4) mit einem Katalysator beschichtet sind, der Aluminiumtrioxid, Kobaltoxid, Eisenoxid oder ein Oxid eines Metalls aus der Gruppe der Übergangselemente umfasst.

**9.** Die Säule gemäß Anspruch 7, **dadurch gekennzeichnet, dass** die Strukturelemente der Säule aus chemisch beständigen Materialien bestehen, wie z. B. säurebeständigem Stahl 316, 304, AF-FeCrAl-Kanthal-Stahl.

**10.** Die Säule gemäß Anspruch 7, **dadurch gekennzeichnet, dass** sie die Böden (4) mit einem Gitter umfasst, das durch thermische, Plasma- oder Schallbehandlung mit einem Katalysator beschichtet ist.

**11.** Die Säule gemäß Anspruch 7, **dadurch gekennzeichnet, dass** die Böden (4) von drei Stützen (6) getragen werden.

**12.** Die Säule gemäß Anspruch 7, **dadurch gekennzeichnet, dass** die Stützen die Form von rohrförmigen Stäben haben.

**13.** Die Säule gemäß Anspruch 7, **dadurch gekennzeichnet, dass** der Diffusor mit einem Maschendurchmesser von 10-100 μm verwendet wird.


**Revendications**

**1.** Une colonne à bulles pour l'ozonation catalytique avec un catalyseur hétérogène à couche mince, destinée à un procédé de traitement des eaux usées par ozonation catalytique, en particulier des eaux usées textiles, sous la forme d'un tronçon de tuyau positionné verticalement et fermé en haut par un couvercle relié par un raccord de tuyau aux parois de la colonne, dans lequel, au fond de la colonne relié par un raccord de tuyau aux parois de la colonne, un diffuseur destiné à fournir de l'ozone est monté, ladite colonne à bulles comprenant un garnissage sous la forme d'un catalyseur à oxyde déposé sur un substrat solide, **caractérisée en ce que** la colonne à bulles comprend en outre un garnissage sous forme de plateaux (4) disposés perpendiculairement à l'axe vertical de la colonne, chacun desdits plateaux étant un treillis métallique circulaire en fil d'une épaisseur d'au moins 0,05 mm, revêtu d'une couche de catalyseur d'une épaisseur ne dépassant pas 2 μm comprenant un oxyde métallique, avec un diamètre de treillis d'au moins 3 mm, dans laquelle les bords dudit treillis métallique circulaire sont fixés entre deux anneaux dont le diamètre extérieur est adapté au diamètre intérieur (D) de la colonne d'au moins 40 mm, lesdits anneaux étant placés l'un au-dessus de l'autre et reliés par un raccord de tuyau, dans laquelle le nombre maximal de plateaux est déterminé par la formule suivante

$$\frac{0.85 \cdot L}{l}$$

dans laquelle

$L$ est la hauteur de la colonne,
$l$ est la distance entre les plateaux (4), et l est égal à 70 x le diamètre d'une bulle d'ozone utilisée dans le processus d'ozonation, et dans laquelle un plateau supérieur (4) est suspendu sur des chaînes (5), dont les extrémités supérieures sont suspendues sur des crochets attachés au couvercle (1), tandis que les extrémités inférieures des chaînes (5) sont reliées à des crochets montés dans un anneau supérieur du plateau supérieur (4), tandis que les autres plateaux (4) sont suspendus sur les chaînes (5), dont les extrémités supérieures sont suspendues sur des crochets fixés aux anneaux inférieurs des plateaux (4) situés au-dessus, et les extrémités inférieures des chaînes (5) sont reliées à des crochets fixés aux anneaux supérieurs des plateaux (4) suspendus sur lesdites chaînes (5).

**2.** La colonne selon la revendication 1, **caractérisée en ce que** les plateaux (4) sont recouverts d'un catalyseur comprenant du trioxyde d'aluminium, de l'oxyde de cobalt, de l'oxyde de fer ou un oxyde d'un métal du groupe des éléments de transition.

**3.** La colonne selon la revendication 1, **caractérisée en ce que** les éléments structurels de la colonne sont fabriqués à partir de matériaux résistants aux produits chimiques, tels que l'acier 316, 304 résistant aux acides, l'acier AF-FeCrAl Kanthal.

**4.** La colonne selon la revendication 1, **caractérisée en ce que** les plateaux (4) sont recouverts d'un catalyseur par traitement thermique, plasma ou sonique.

**5.** La colonne selon la revendication 1, **caractérisée en ce que** les plateaux (4) sont suspendus sur trois chaînes (5).

**6.** La colonne selon la revendication 1, **caractérisée en ce que** le diffuseur avec un diamètre de maille de 10 à 100 μm est utilisé.

**7.** Une colonne à bulles pour l'ozonation catalytique avec un catalyseur hétérogène à couche mince, destinée à un procédé de traitement des eaux usées par ozonation catalytique, en particulier des eaux usées textiles, sous la forme d'un tronçon de tuyau positionné verticalement et fermé en haut par un couvercle relié par un raccord de tuyau aux parois de la colonne, dans lequel, au fond de la colonne relié par un raccord de tuyau aux parois de la colonne, un diffuseur destiné à fournir de l'ozone est monté, ladite colonne à bulles comprenant un garnissage sous la forme d'un catalyseur à oxyde déposé sur un substrat solide, **caractérisée en ce que** ladite colonne à bulles comprend en outre un garnissage sous forme de plateaux (4) disposés perpendiculairement à l'axe vertical de la colonne, chacun de ces plateaux étant un treillis métallique circulaire en fil d'une épaisseur d'au moins 0,05 mm, revêtu d'une couche de catalyseur d'une épaisseur ne dépassant pas 2 $\mu$m comprenant un oxyde métallique, avec un diamètre de treillis d'au moins 3 mm, dans laquelle les bords dudit treillis métallique circulaire sont fixés entre deux anneaux dont le diamètre extérieur est adapté au diamètre intérieur (D) de la colonne d'au moins 40 mm, lesdits anneaux étant placés l'un au-dessus de l'autre et reliés par un raccord de tuyau, dans laquelle le nombre maximal de plateaux est déterminé par la formule suivante

$$\frac{0.85 \cdot L}{l}$$

dans laquelle

L est la hauteur de la colonne,
l est la distance entre les plateaux (4), et l est égal à 70 x le diamètre d'une bulle d'ozone utilisée dans le processus d'ozonation, et dans laquelle un plateau inférieur (4) du garnissage repose sur des supports (6), les extrémités supérieures des supports (6) étant fixées à un anneau inférieur du plateau inférieur (4), les extrémités inférieures des supports (6) reposent sur une grille placée au fond (3) de la colonne, les extrémités supérieures des supports (6) étant fixées à l'anneau inférieur de chacun des autres plateaux (4), les extrémités inférieures de ces supports reposant sur les anneaux supérieurs des plateaux (4) situés en dessous.

8. La colonne selon la revendication 7, **caractérisée en ce que** les plateaux (4) sont recouverts d'un catalyseur comprenant du trioxyde d'aluminium, de l'oxyde de cobalt, de l'oxyde de fer ou un oxyde d'un métal du groupe des éléments de transition.

9. La colonne selon la revendication 7, **caractérisée en ce que** les éléments structurels de la colonne sont fabriqués à partir de matériaux résistants aux produits chimiques, tels que l'acier 316, 304 résistant aux acides, l'acier AF-FeCrAl Kanthal.

10. La colonne selon la revendication 7, **caractérisée en ce que** elle comprend les plateaux (4) dont le treillis est recouvert d'un catalyseur par traitement thermique, plasma ou sonique.

11. La colonne selon la revendication 7, **caractérisée en ce que** les plateaux (4) sont soutenus par trois supports (6).

12. La colonne selon la revendication 7, **caractérisée en ce que** les supports sont sous forme de tiges tubulaires.

13. La colonne selon la revendication 7, **caractérisée en ce que** le diffuseur avec un diamètre de maille de 10 à 100 $\mu$m est utilisé.

**Fig. 1**

**Fig. 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- PL 150303
- US 11279640 B2
- CN 215327164 U
- CN 110075708 A

### Non-patent literature cited in the description

- *Chemosphere*, 2009, vol. 75, 250-255
- *Ozone-Science & Engineering*, 2017, vol. 39, 357-365
- *Chemical Engineering Journal*, 2019, vol. 376, 120597
- *Separation and Purification Technology*, 2010, vol. 72, 186-193
- *Scientific Reports*, 2018, vol. 8, 1-11
- *Journal of Hazardous Materials*, 2018, vol. 357, 363-375
- *Journal of Environmental Chemical Engineering*, 2015, vol. 3, 1860-1871
- *Separation and Purification Technology*, 2021, vol. 257, 117909